# EUROPEAN PATENT APPLICATION

(11) **EP 4 516 108 A1**
(43) Date of publication of application: **05.03.2025**
(21) Application number: 23193786.3
(22) Date of filing: 28.08.2023
(51) Int. Cl.: A21D 2/14, A21D 2/18, A21D 8/04, A23L 3/3508, A23L 3/3526, A23P 20/10

(54) **METHOD FOR PRESERVING A BAKERY PRODUCT USING CHITOSAN AS INGREDIENT**

(71) Applicant: Mauri Technology B.V., 4878 AK Etten-Leur (NL)
(72) Inventor: ATASHGAHI, Siavash, 4878 AK Etten-Leur (NL); LATHAM, Philip Ross, 4878 AK Etten-Leur (NL)
(74) Representative: V.O.

(57) **Abstract**

The invention relates to a method for preserving a bakery product, comprising
(i) preparing a dispersion of chitosan in an aqueous medium;
(ii) optionally removing a liquid fraction of said aqueous medium to obtain a solid fraction;
(iii) mixing said dispersion from step (i) or said solid fraction from step (ii) with one or more dough ingredients to obtain a dough; and
(iv) baking the dough to obtain a bakery product.

The invention further relates to a method for preserving a bakery product, comprising providing a dough comprising chitosan and baking the dough to obtain a bakery product, wherein said chitosan is at least partly coated with a coating material, wherein said coating material is at least substantially solid at the dough temperature and wherein said coating material is meltable during baking temperature.

## Description

The invention relates to a method for producing a dough, a method for producing a bakery product and a dough and a bakery product obtainable by said method.

Preservation of bakery products is relevant to prevent spoilage, in particular by spoilage moulds such as *Aspergillus niger* and *Penicillium paneum,* thereby extending mould-free shelf life (MFSL). Currently, chemical preservatives such as calcium propionate (CalPro) are mostly used as preservative. However, as there is currently a growing demand for clean-label products, alternatives to chemical preservatives are required.

However, whereas natural preservatives have been rather successful in replacing chemical preservatives in various types of foods and drinks, finding effective natural preservatives for bakery products, especially bread, has remained a challenge. This is related to the complex matrix of dough/bread, shear force of mixing, intense heat-treatment during baking, and lack of flavouring compounds to mask the potential sensory impact of the preservatives.

Chitosan is a linear polysaccharide composed of D-glucosamine (GlcN) and N-acetyl-D-glucosamine (GlcNAc) units, linked together by β-(1,4) glycosidic bonds. At physiological pH, chitosan is positively charged and typically exerts antimicrobial activity by perturbing the negatively charged cell envelope of some micro-organisms.

However, because the antimicrobial activity of chitosan is related to ionic interactions with negatively charged components of the micro-organisms cell envelope, the food matrix can strongly interfere with the antimicrobial activity of chitosan. This is especially the case in bakery products, which typically contain salts and proteins that can reduce chitosan's antimicrobial activity.

Accordingly, the use of chitosan as a natural preservative in bakery products is limited.

The inventors surprisingly realized that the antimicrobial activity of chitosan in bakery products may be significantly enhanced when chitosan is administered into the dough in a specific formulation.

Accordingly, the invention relates to a method for preserving a bakery product, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough; and
(iv) baking the dough to obtain the bakery product.

The invention further relates to a method for preserving a bakery product, comprising providing a dough comprising chitosan and baking the dough to obtain a bakery product, wherein said chitosan is at least partly coated with a coating material, wherein said coating material is at least substantially solid at the dough temperature and wherein said coating material is meltable during baking temperature.

### Summary of the invention

The invention relates to a method for preserving a bakery product, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough; and
(iv) baking the dough to obtain the bakery product.

The invention further relates to a method for preserving a bakery product, comprising providing a dough comprising chitosan and baking the dough to obtain a bakery product, wherein said chitosan is at least partly coated with a coating material, wherein said coating material is at least substantially solid at the dough temperature and wherein said coating material is meltable during baking temperature, preferably wherein said coating material is a fatty substance, preferably a fatty substance having a melting point of at least 40 °C, more preferably wherein said fatty substance is selected from (a high-melting fraction of) rapeseed oil, palm oil and glycerol monostearate.

In the methods according to the invention, said dough has a pH of at most 7, preferably at most 6, preferably at most 5.7, most preferably at most 5.5, as determinable by the method described in Example 1.

Preferably, said chitosan is present in an amount of at least 0.5 wt.%, based on total dry weight of the dough and/or has one or more of the following properties:
a) a molecular weight (MW) of at least 10 kDa, preferably at least 15 kDa;
b) an MW of at most 285 kDa, preferably at most 270 kDa, more preferably at most 200 kDa, at most 150 kDa, in particular at most 100 kDa;
c) a degree of deacetylation (DDA) of at least 70%.

In the method according to the invention, said dough preferably further comprises an organic acid having a pH of at most 4, more preferably said dough comprises fermented wheat flour.

The invention further relates to a bakery product obtainable by a method according to any one of the preceding claims, preferably wherein said bakery product is selected from breads, such as loaf breads, bagels, buns, rolls, croissants, baguettes, pretzels, brioches, crumpets and flatbreads; dessert cakes, such as pound cakes, sponge cakes, chiffon cakes, genoise cakes, cake muffins, brownies, cheesecakes, and angel cakes; pastries, pies, cookies flour tortillas and pizza's, preferably wherein said bakery product is a bread, more preferably a loaf bread.

Said bakery product is preferably essentially free of chemical preservatives, preferably wherein said bakery product is clean label.

Preferably, said bakery product has a MFSL of at least 55 h, preferably at least 60 h, more preferably at least 80 h, in particular at least 85 h as determinable with an accelerated shelf-life testing (ASLT) as described in Example 1.

The invention further relates to a method for preparing a dough, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough.

The invention further relates to a method for preparing a dough, comprising mixing chitosan with one or more dough ingredients to obtain a dough, wherein said chitosan is at least partly coated with a suitable coating material, wherein said coating material is at least substantially solid at the dough temperature and wherein said coating material is meltable during baking temperature.

The invention further relates to a dough obtainable by the methods according to the invention.

The invention further pertains to a dough or a pre-mix for preparing a bakery product comprising chitosan, wherein said chitosan is at least partly coated with a coating material, wherein said coating material is at least substantially solid at dough temperature and wherein said coating material is meltable during baking temperature.

### Figures

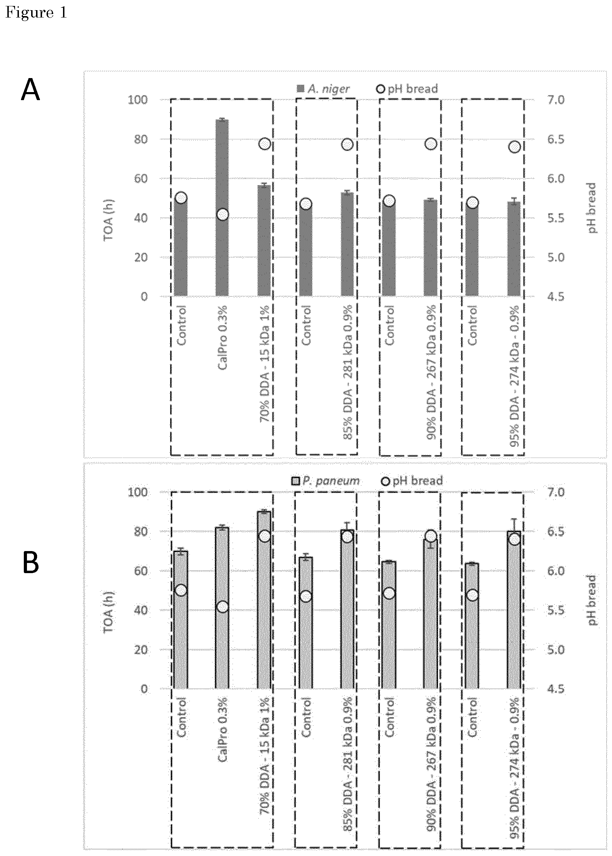

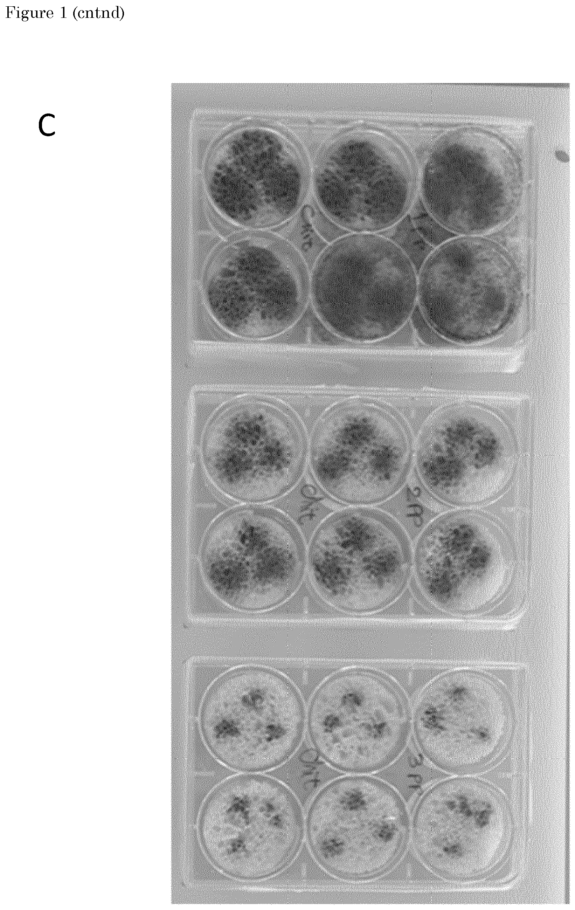

Figure 1. (A) Antimicrobial impact of chitosan samples with different MW and DDA on pH and time of appearance (TOA) of *A. niger* (A) and *P. paneum* (B) in breadcrumbs. Low MW chitosan (15 kDa, 70% DDA, KitoZyme) was tested in tin breads with 520g dough and dosed at 1% FWB (third bar), whereas the high MW chitosan samples (267-281 kDa, 85-95% DDA, ChiBio) were tested in bread rolls with 50g dough and dosed at 0.9% FWB (fifth, seventh and ninth bar). Samples from each different test were shown in dashed rectangles for better comparison. Low MW chitosan was shown in the first rectangle from left. (C) *P. paneum* growth pattern after 7 days of inoculation in control breads without preservative (left), breads with CalPro (0.3% FWB, middle) and breads with low MW chitosan (1% FWB, right).

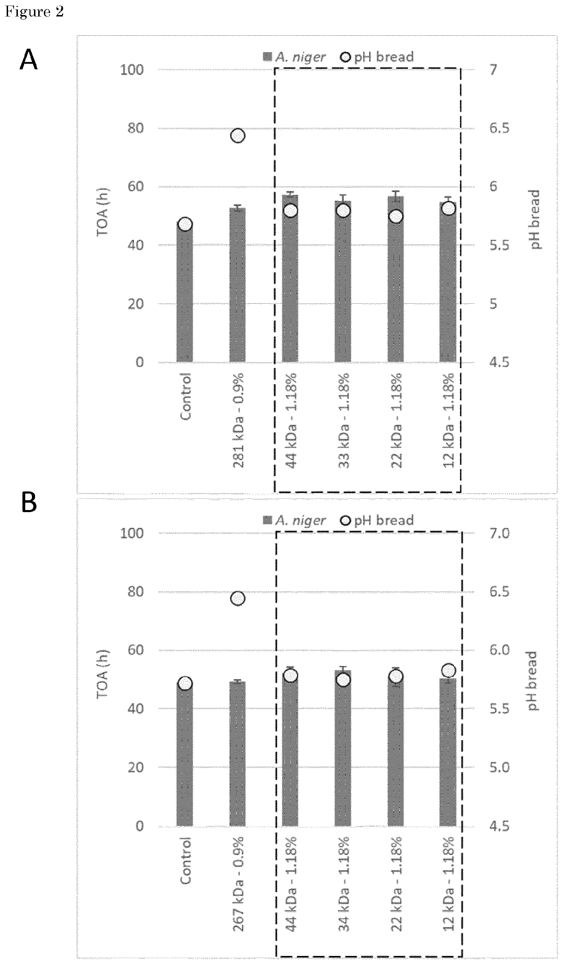

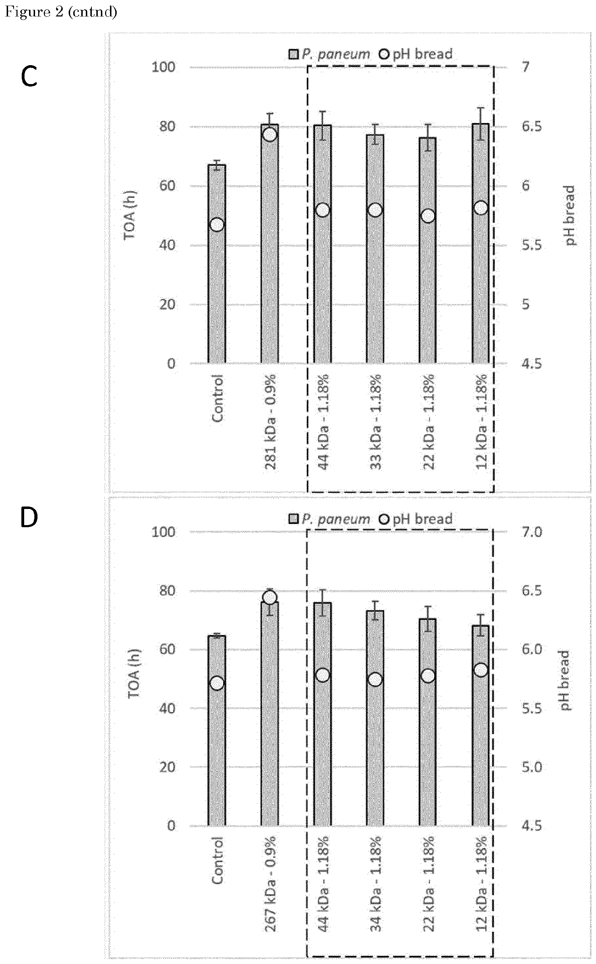

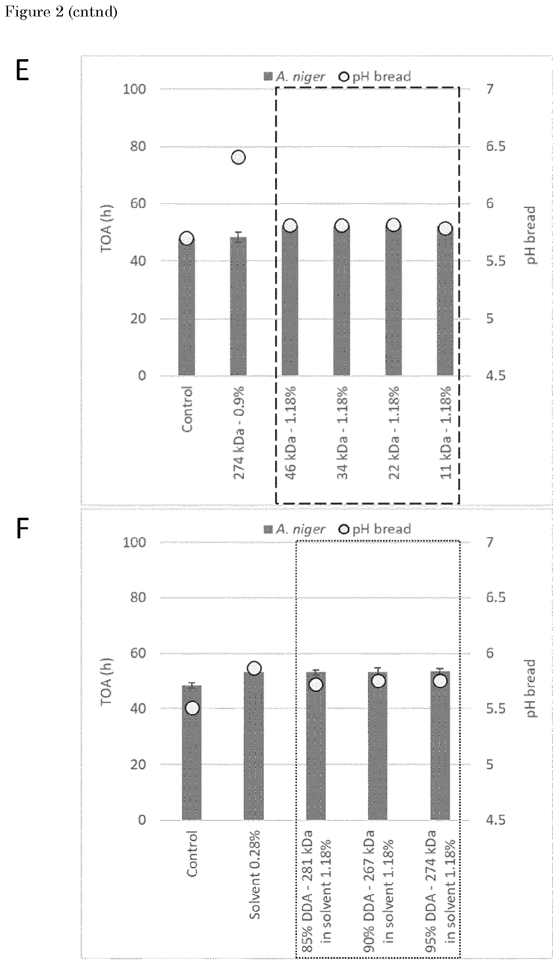

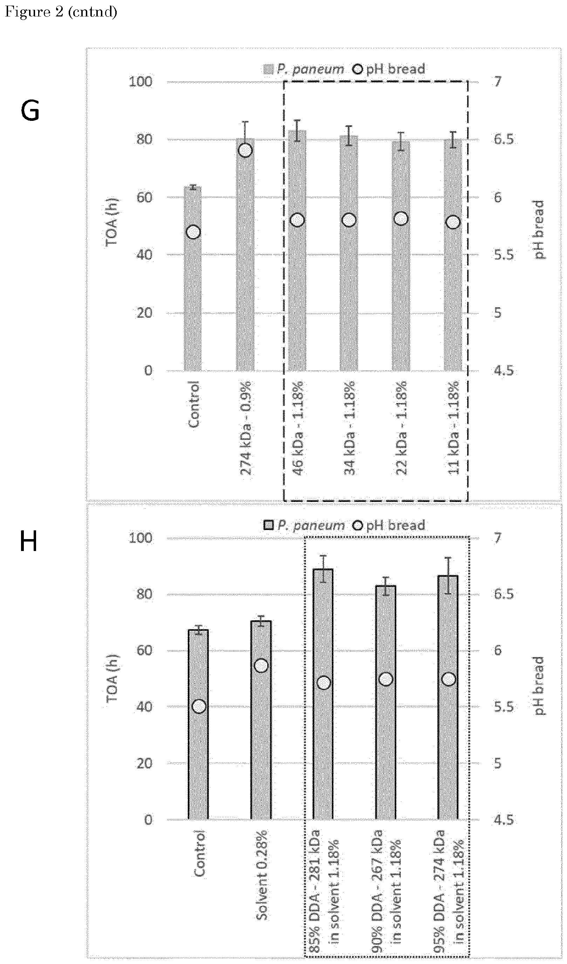

Figure 2. Antimicrobial impact of chitosan hydrolysis and dispersing in solvent on pH and TOA of *A. niger* and *P. paneum* in breadcrumbs. Chitosan samples of 85% DDA (A, C), 90% DDA (B, D), and 95% DDA (E, G) were applied at different degrees of enzymatic hydrolysis. Solvent control and chitosan samples (MW 267-281, DDA 85%-95%) dispersed in solvent but not hydrolysed were used as controls (F, H). The hydrolysed samples were dosed higher (1.18% FWB) compared to untreated samples (0.9% FBW) to account for the solvent fraction (0.28 FWB). Groups of samples were shown in dashed rectangles for better comparison.

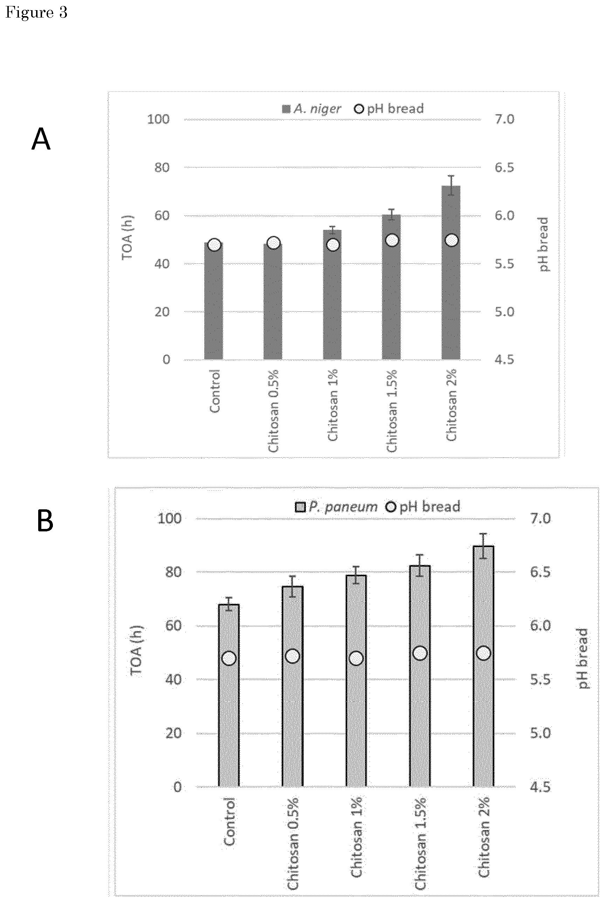

Figure 3. Antimicrobial impact of different dosage of hydrolysed chitosan (90% DDA, 44 kDa) dosed at 0.5 (0.34% chitosan, 0.16% solvent), 1 (0.69% chitosan, 0.31% solvent), 1.5, (1.03 % chitosan, 0.47% solvent) and 2% (1.38 % chitosan, 0.62% solvent)FWB on pH and TOA of *A. niger* (A) and *P. paneum* (B) in breadcrumbs.

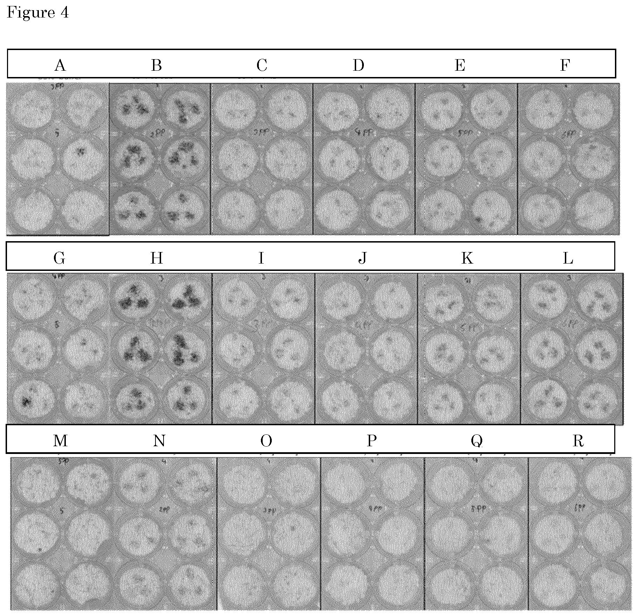

Figure 4. Impact of hydrolysis of different chitosan samples on *P. paneum* growth pattern after 5 days on breadcrumbs. From left to right: original chitosan dispersed but not hydrolysed (A: Mw 281 kDa, G: Mw 267 kDa; M: Mw 274 kDa), solid chitosan not dispersed and not hydrolysed (B: Mw 281 kDa, H: Mw 267 kDa; N: Mw 274 kDa), followed by dispersed and hydrolysed chitosan after 0.5h (C: Mw 44 kDa I: Mw 44 kDa; O; Mw 46 kDa), 1h (D: Mw 33 kDa; J: Mw 44 kDa; P: Mw 46 kDa), 2h (E: Mw 22 kDa; K: Mw: 22 kDa; Q: Mw: 22 kDa), and 6h (F: Mw 12 kDa, L: Mw 12 kDa; R: Mw: 11 kDa).

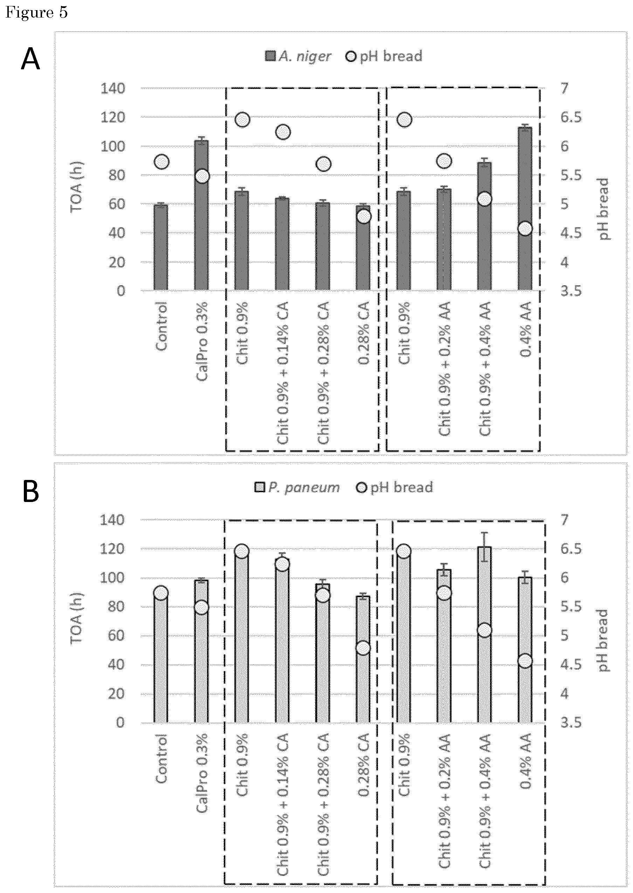

Figure 5. Antimicrobial impact of chitosan (MW 15 kDa, 70% DDA) in presence of weak organic acids on pH and TOA of *A. niger* (A) and *P. paneum* (B) in breadcrumbs. Citric acid (designated as CA, dosed at 0.14 or 0.28% FWB) and acetic acid (designated as AA, dosed at 0.2 or 0.4 % FWB) were added concomitant with chitosan to the mixing bowl before bread baking. CA (0.28% FWB) and AA (0.4 % FWB) were also included without chitosan as controls. Groups of samples were shown in dashed rectangles for better comparison.

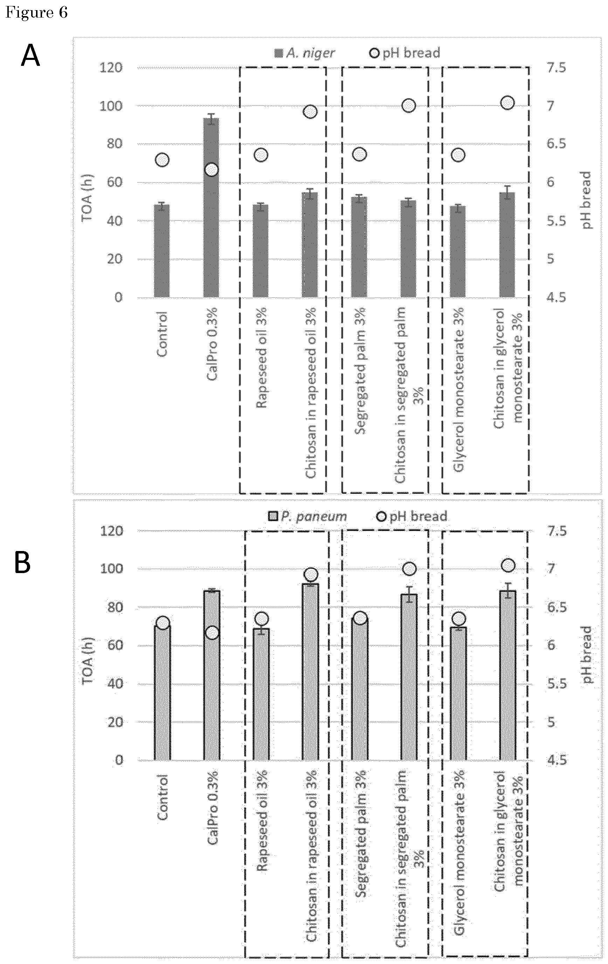

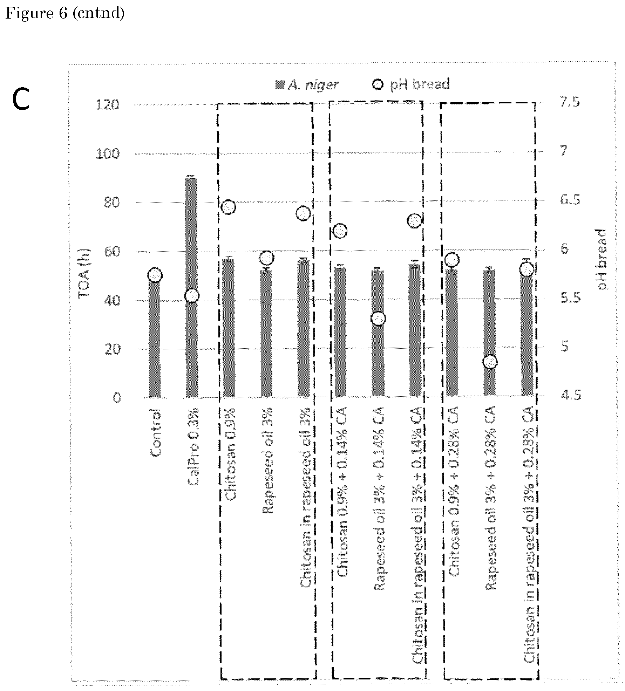

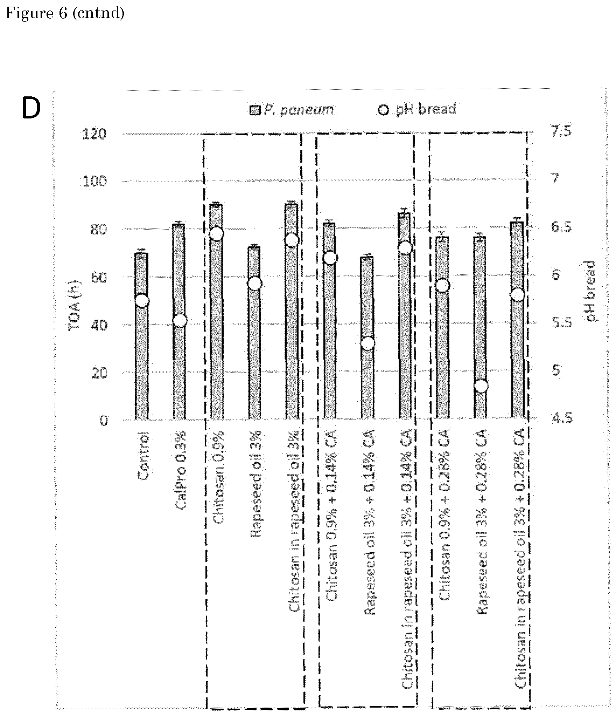

Figure 6. Impact of free and encapsulated chitosan (MW 15 kDa, 70% DDA) in high melting point fats (rapeseed oil, segregated palm, and glycerol monostearate) on pH and TOA of *A. niger* (A) and *P. paneum* (B) in breadcrumbs. The encapsulated chitosan contained 30% chitosan and hence was dosed at 3% FWB to match 0.9% FWB of free chitosan. High melting point fats without chitosan were included to control the impact of carrier material. (C, D) show experiments using *A. niger* (C) and *P. paneum* (D) where free and encapsulated chitosan were also used in combination with citric acid (designated as CA, dosed at 0.14 or 0.28% FWB) as an acidulant. Groups of samples were shown in dashed rectangles for better comparison.

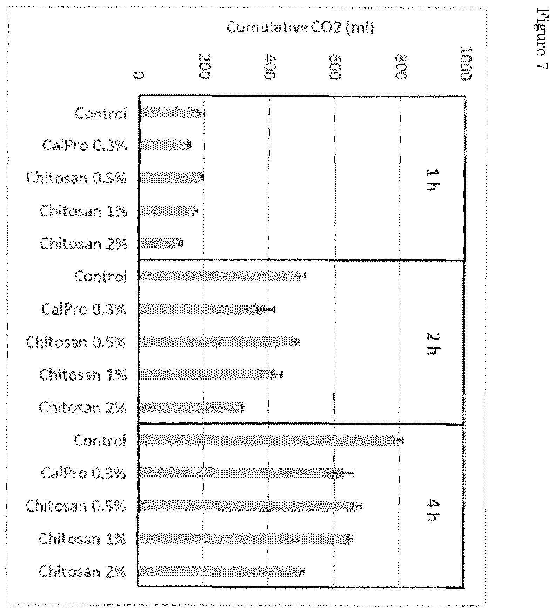

Figure 7. Impact of chitosan (MW 15 kDa, 70% DDA) on baker's yeast fermentation. Cumulative CO₂ production was shown for control breads (no preservative), and bread containing CalPro (0.3% FWB) and chitosan (MW 50 kDa, 70% DDA; dosed at 0.5, 1, and 2 % FWB).

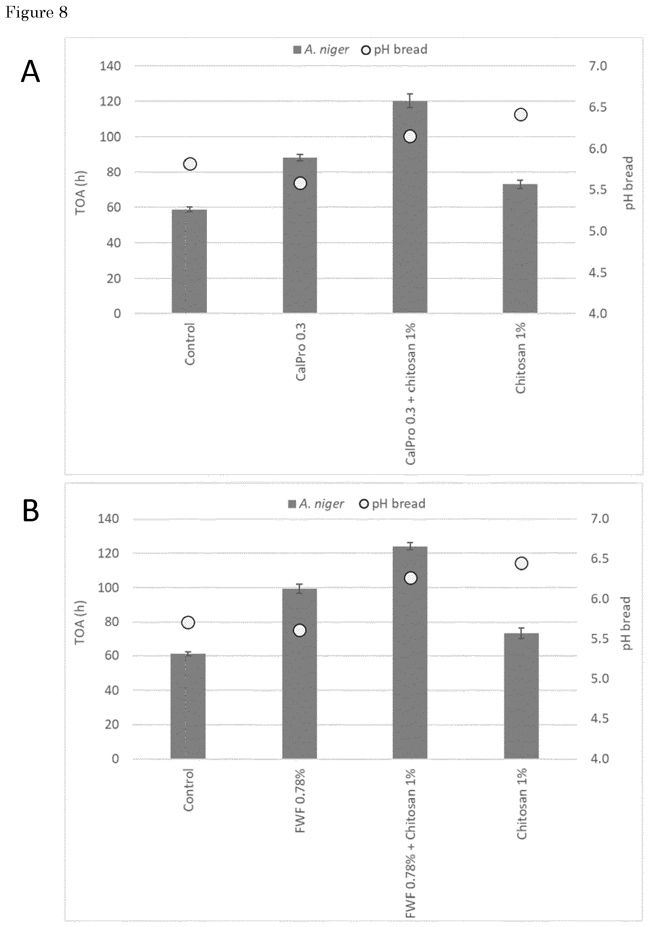

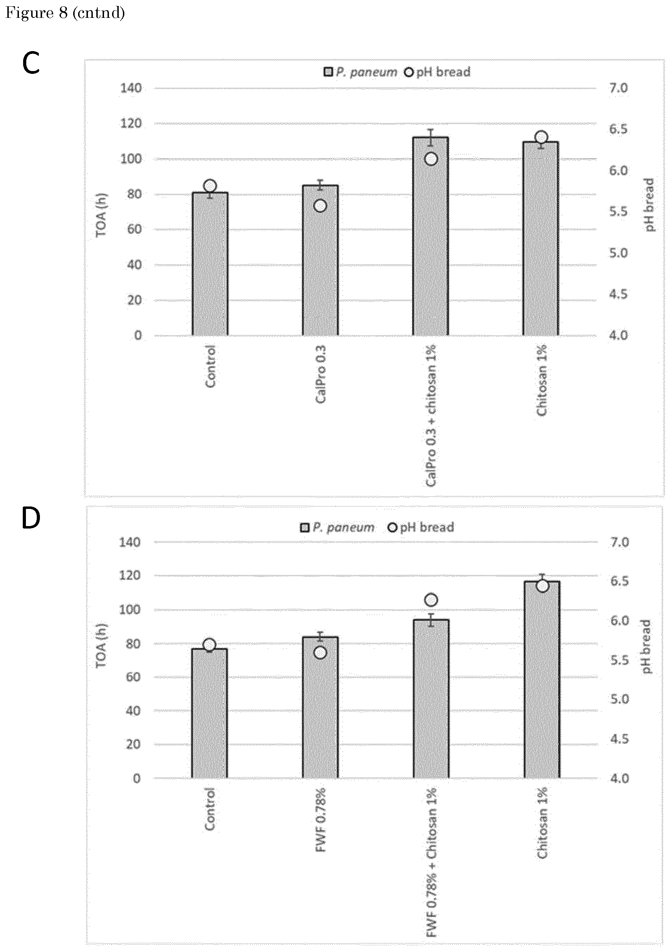

Figure 8. Antimicrobial impact of chitosan (MW 15 kDa, 70% DDA; 1% FWB) in combination with CalPro (0.3% FWB) on pH and TOA of *A. niger* (A) or *P. paneum* (D) in breadcrumbs, and of chitosan (MW 15 kDa, 70% DDA; 1% FWB) in combination with FWF (0.78% FWB) on pH and TOA of *A. niger* (B) or *P. paneum* (C) in breadcrumbs.

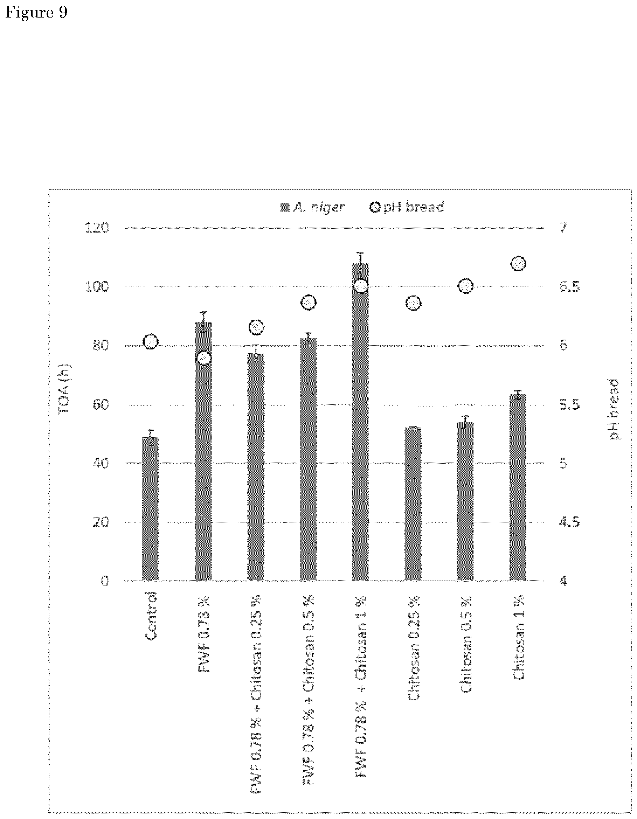

Figure 9. Antimicrobial impact of FWF (0.78% FWB) in combination different dosage of chitosan (MW 15 kDa, 70% DDA; 0.25, 0.5, 1% FWB) on pH and TOA of *A*. *niger* in breadcrumbs.

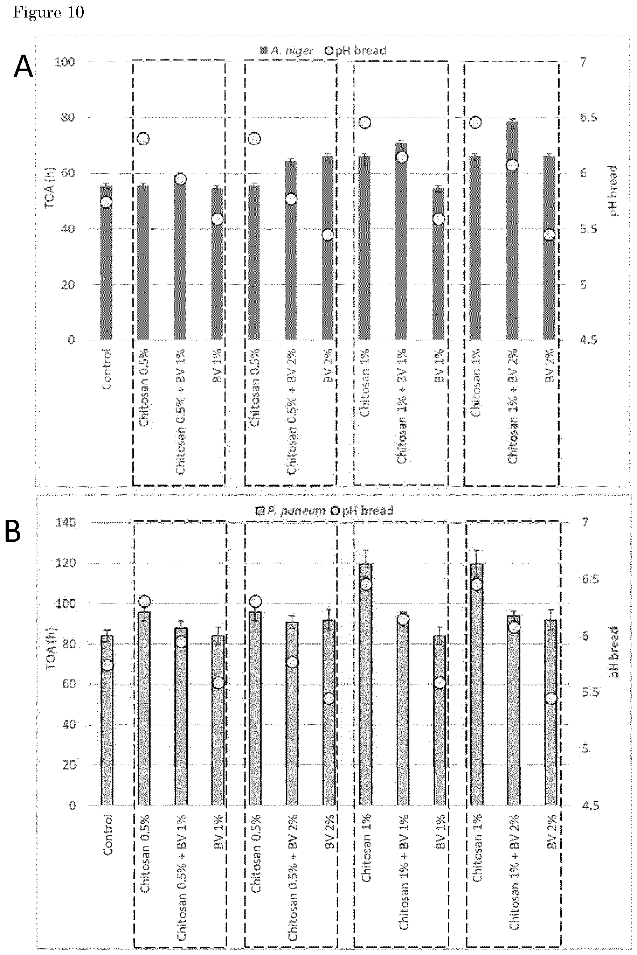

Figure 10. Antimicrobial impact of chitosan (MW 15 kDa, 70% DDA) in combination with buffered vinegar (designated as BV) on pH and TOA of *A. niger* (A) and *P. paneum* (B) in breadcrumbs containing buffered vinegar (1 or 2% FWB) and/or chitosan (0.5 or 1% FWB). Groups of samples were shown in dashed rectangles for better comparison. Figure 10. Antimicrobial impact of chitosan (MW 15 kDa, 70% DDA) in combination with buffered vinegar (designated as BV) on pH and TOA of *A*. *niger* (A) and *P. paneum* (B) in breadcrumbs containing buffered vinegar (1 or 2% FWB) and/or chitosan (0.5 or 1% FWB). Groups of samples were shown in dashed rectangles for better comparison.

### Detailed description

The term "or" as used herein means "and/or" unless specified otherwise.

The term "a" or "an" as used herein means "at least one" unless specified otherwise.

The term "essential(ly)" is generally used herein to indicate that it has the general character or function of that which is specified. When referring to a quantifiable feature, this term is in particular used to indicate that it is more than 90 %, more in particular more than 95 %, even more in particular more than 98 % of the maximum that feature. The term 'essentially free' is generally used herein to indicate that a substance is not present (below the detection limit achievable with analytical technology as available on the effective filing date) or present in such a low amount that it does not significantly affect the property of the product that is essentially free of said substance or that it is present in such a low amount (trace) that it does not need to be labelled on the packaged product that is essentially free of the substance. In practice, in quantitative terms, a product is usually considered essentially free of a substance, if the content of the substance is 0 - 0.1 wt.%, in particular 0 - 0.01 wt.%, more in particular 0 - 0.005 wt.%, based on total weight of the product in which it is present.

The term "about" in relation to a value generally includes a range around that value as will be understood by the skilled person. In particular, the range is from at least 10 % below to at least 10 % above the value, more specifically from 5 % below to 5 % above the value.

When referring to a "noun" (*e.g.,* a compound, an additive *etc.*) in singular, the plural is meant to be included, unless specified otherwise.

The invention is based on the inventor's insights that the antimicrobial activity of chitosan in bakery products may be markedly improved when chitosan is administered to the dough in a specific way.

### Chitosan

Chitosan is a linear polysaccharide composed of D-glucosamine (GlcN) and N-acetyl-D-glucosamine (GlcNAc) units, linked together by β-(1,4) glycosidic bonds, wherein the proportion of GlcN units in the polysaccharide exceeds the proportion of GlcNAc units.

Chitosan may be obtained from any suitable source. Preferably, chitosan is obtained from de-*N*-acetylation of chitin, a closely related linear polysaccharide composed of GlcNAc units, linked together by β-(1,4) glycosidic bonds biopolymer. Chitin may be isolated from the exoskeletons of crustaceans and insects and in the cell walls of most fungi and some algae (Hu and Ganzle, 2018. J. Appl. Microbiol, 126, 1318-1331).

In principle, chitosan may be obtained from any source of chitin, but preferably said chitosan is obtained from chitin present in the cell walls of fungi, more preferably chitin present in the cell walls of *Aspergillus* species, in particular *A. niger.*

Methods to isolate chitin from its biological source have been described in the art. For example, chitin may be obtained by processing crushed shells of crustaceans with hydrogen chloride to achieve demineralization and subsequently boiling in dilute sodium hydroxide to remove proteins (Hu and Ganzle, 2018. J. Appl. Microbiol, 126, 1318-1331). Alternatively, chitin may be extracted from the cell wall from fungi after fermentation, by treating the mycelia under alkaline conditions at elevated temperature, followed by acid treatment and precipitation to obtain chitosan (Huq et al. 2022. J. Bioresources and Bioproducts, 7(2): 85-98).

Chitosan may be prepared from chitin using any suitable method known in the art, such as subjecting chitin to alkaline conditions at elevated temperatures, or by subjecting chitin to enzymatic hydrolysis, using a chitin-deacetylase (Hu and Ganzle, 2018. J. Appl. Microbiol, 126, 1318-1331).

Depending on the conditions used to deacetylate chitin, chitosans with varying DDA may be obtained. In a pre-mix, dough or bakery product according to the invention, the DDA of chitosan is preferably at least 50%, more preferably at least 60%, even more preferably at least 70%, at least 80%, at least 90%, at least 95%.

Preferably, the DDA of chitosan is between 51% and 95%, more preferably between about 60% and about 90%, most preferably between about 70% and about 85%.

The DDA is calculated by dividing the number of GlcN units by the total number of GclN + GlcNAcs units and multiplying by 100.

The DDA of chitosan may be determined using any suitable analytical method known in the art, such as 1H NMR, LC-MS, FTIR spectroscopy and FT-Raman spectroscopy for example as described by Rehman et al. 2023. Carbohydrate Polymers, 302:120428.

Without wishing to be bound by any theory, it is believed that antimicrobial properties of chitosan increase with increasing DDA, due to increased positive charge density, facilitating stronger electrostatic interactions with negatively charged components of the cell wall and cytoplasmic membrane of microbes. These interactions are thought to disrupt the integrity of cell envelope, subsequently causing dissipation of membrane potential and leakage of cells, leading to cell death (Figure 1; Hu and Ganzle, 2018. J. Appl. Microbiol, 126, 1318-1331).

In principle said chitosan present in the bakery product, dough or pre-mix according to the invention may have any MW. If chitosan is obtained from deacetylation of chitin, the MW of chitosan may depend on the MW of chitin said chitosan is obtained from. Further, chitosan may optionally be subjected to (enzymatic) hydrolysis to reduce the molecular weight.

Preferably, the number average MW of said chitosan is at least 10 kDa, more preferably at least 12 kDa, in particular at least 15 kDa. Preferably, the number average MW of chitosan is at most 300 kDa, more preferably at most 285 kDa, at most 270 kDa, more preferably at most 200 kDa, at most 150 kDa, such as at most 100 kDa.

Preferably, the number average MW of chitosan is between about 10 kDa and about 300 kDa, more preferably between about 11 kDa and about 280 kDa, between about 12 kDa and about 150 kDa, between about 13 kDa and about 120 kDa, between about 14 kDa and about 100 kDa, between about 15 kDa and about 50 kDa, between about 15 kDa and about 25 kDa.

The number average MW of chitosan may be determined using gel permeation chromatography, for example using the method described in Example 5.

Without wishing to be bound by any theory, it is believed that antimicrobial properties of chitosan increase with increasing MW, due to an increased positive charge density on the chitosan, facilitating stronger electrostatic interactions as described above.

Said chitosan is present in the dough in an antimicrobially effective amount, i.e. an amount sufficient to exert an antimicrobial effect in the bakery product.

Said chitosan is preferably present in an amount of at least 0.2 wt.%, more preferably at least 0.4 wt.%, more preferably at least 0.5 wt.%, at least 0.6 wt.%, at least 0.8 wt.%, at least 0.9 wt.%, most preferably at least 1 wt.%, based on the total dry weight.

Preferably, said chitosan is present in an amount, based on the total dry weight, of between about 0.1 wt.% and about 5 wt.%, more preferably between about 0.2 wt.% and about 3 wt.%, between about 0.5 wt.% and about 2 wt.%, or between 0.65 and 1.5 wt.%.

Said chitosan is preferably at least partly coated with a coating material, wherein said coating material is at least substantially solid at dough temperature and wherein said coating material is meltable during baking.

Said coating material may in principle be any suitable coating material that is capable of at least partly coating chitosan. Preferably, said chitosan is coated for at least 25% of the surface of chitosan with a suitable coating material, more preferably at least 50%, at least 60%, at least 70%, at least 80%, at least 90% of the total surface of the chitosan. Most preferably, said chitosan is at least substantially encapsulated in a coating material.

Preferably, said at least partly coated chitosan is an at least partly coated chitosan particle. Preferably, said coating comprises at least 10 wt.% of the total at least partly coated chitosan (particle), based on the total weight of the at least partly coated chitosan (particle), more preferably at least 20 wt.%, at least 30 wt.%, at least 40 wt.%, at least 50 wt.%, at least 60 wt.%, most preferably at least 70 wt.% of the total weight of the at least partly coated chitosan (particle).

Preferably, said coating comprises at most 99 wt.% of the total at least partly coated chitosan (particle), based on the total weight of the at least partly coated chitosan (particle), more preferably at most 98 wt.%, at most 97 wt.%, at most 96 wt.%, at most 95 wt.%, at most 90 wt.%, at most 80 wt.%, most preferably at most 75 wt.% of the total weight of the at least partly coated chitosan (particle).

Preferably, said coating comprises between about 10 wt.% and about 99 wt.% of the total at least partly coated chitosan particle, more preferably between about 15 wt.% and about 80 wt.%, between about 20 wt.% and about 50 wt.%, in particular between about 25 wt.% and about 40 wt.% of the total weight of the at least partly coated chitosan (particle).

Said coating is substantially solid during preparation of the dough, e.g., at typical dough temperature and meltable at baking temperature, meaning that during preparation of the dough, said coating material at least substantially holds its shape or form.

Preferred coating materials comprise a fatty substance, such as a monoglyceride, diglyceride, triglyceride, shortening or a wax. Preferably said coating material comprises a triglyceride or a monoglyceride, most preferably a triglyceride.

Preferably said coating material comprises a vegetable oil, more preferably rapeseed oil, palm oil or a fraction thereof, preferably a high-melting fraction thereof. A high-melting fraction may be obtained by fractionating said rapeseed oil into a low-melting (olein) and high-melting (stearin) fraction. Alternatively or additionally, a high-melting fraction may be obtained by hardening the vegetable oil, e.g. by hydrogenolysis.

Preferably said triglyceride is selected from rapeseed oil and palm oil, more preferably from hydrogenated rapeseed oil, hydrogenated palm oil, the high-melting fraction of rapeseed oil and the high-melting fraction of palm oil.

Alternatively or additionally, said fatty substance is a monoglyceride, preferably glycerol monostearate.

Said coating material, preferably said fatty substance, preferably has a melting point of at least 25 °C, more preferably at least 30 °C, at least 35 °C, at least 40 °C, more preferably at least 45 °C, at least 50 °C, at least 55 °C, at least 60 °C, in particular at least 65 °C.

The coating material usually has a melting point of less than 200 °C, more preferably less than 180 °C, less than 150 °C, less than 120 °C, in particular less than 100 °C, such as less than 80 °C. Typical ranges are between about 25 °C and about 200 °C, between about 30 °C and about 150 °C, between about 35 °C and about 100 °C, in particular between about 40 °C and about 80 °C.

Said melting point may be determined using any suitable method known in the art, such as differential scanning calorimetry (DSC) or a capillary method. As the skilled person will appreciate, if the coating material has a melting range, typically the coating material starts melting at a first temperature and is completely molten at a second temperature (higher than the first temperature). The melting then point refers to the peak temperature as determinable with DSC or the mean of the melting range as determinable with capillary method.

Accordingly, the invention further relates to a dough, pre-mix or natural preservative comprising chitosan at least partly coated with a coating material, wherein said coating material is at least substantially solid at dough temperature and wherein said coating material is meltable during baking.

The inventors further realized that the effect of said coating material could be enhanced when the pH of the bakery product was below 7, more preferably below 6.5, even more preferably below 6. Typically, the pH of the bakery product is between about 4 and about 7, more preferably between about 4.5 and about 6.5, in particular between about 5 and about 6.3.

Accordingly, the invention further relates to a dough, pre-mix or natural preservative comprising chitosan at least partly coated with a coating material, wherein said coating material is at least substantially solid at dough temperature and wherein said coating material is meltable during baking, and wherein the pH of said dough, pre-mix or bakery product is below 7, in particular between about 4 and about 6.5.

This may be achieved by inclusion of an acidulant in the pre-mix, dough or bakery product according to the invention. Preferably, said acidulant has a pKa of below 4, such as citric acid.

Said acidulant is preferably present in an amount of at least 0.1 wt.%, more preferably at least 0.15 wt.%, at least 0.2 wt.% at least 0.25 wt.%, based on the total dry weight. Preferably, said acidulant is present in an amount of at most 1 wt.%, at most 0.8 wt.%, at most 0.6 wt.%, at most 0.5 wt.%, at most 0.4 wt.% based on the total dry weight. Typically, said acidulant is present in an amount of between about 0.1 wt.% and about 1 wt.%, between about 0.15 wt.% and about 0.8 wt.%, between about 0.2 wt.% and about 0.6 wt.%, between about 0.25 wt.% and about 0.4 wt.%, based on the total dry weight.

The inventors surprisingly realized that chitosan prolonged MFSL of a bakery product compared to control, i.e., a bakery product lacking chitosan but which is otherwise the same. This was unexpected, due to the complex matrix of bakery products and the presence of food ingredients such as NaCl and proteins, which may shield positive charges of chitosan, thereby decreasing its activity (Hu and Gänzle, 2018. J. Appl. Microbiol, 126, 1318-1331).

The inventors further realized that chitosan (about 1 wt.%, based on total dry weight) was particularly effective against *P. paneum.* Where TOA of *A. niger* of a bakery product comprising chitosan was prolonged with at least 13%, compared to control without preservative in an ASLT, the TOA of *P. paneum* was prolonged with at least 28% compared to control (see Figure 1). Notably, chitosan was able to prolong TOA of *P. paneum* by an additional 11% compared to CalPro (about 0.3 wt.%, based on total dry weight).

Accordingly, the invention further relates to the use of chitosan as an antimicrobial agent against *P. paneum.*

### Fluid mixture of chitosan

The invention further relates to a method for preserving a bakery product, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough; and
(iv) baking the dough to obtain the bakery product.

The inventors surprisingly realized that the antimicrobial activity of chitosan in said bakery product may be significantly enhanced using a method according to the invention (see e.g., Example 2 and Figure 2, comparison A and B, G and H and C and M and N).

A "fluid mixture" is used herein for liquids and mixtures of liquids and at least one other phase, such as suspensions, that flow without applying external pressure (pressure other than gravity).

Preferably, said fluid mixture is a solution, a dispersion or a suspension, more preferably a solution or a dispersion.

A solution is typically understood to mean a form of a fluid mixture that is least substantially clear, meaning there are no particles, haze or turbidity visible to the naked eye.

Herein, a dispersion may be understood as a form of a fluid mixture that comprises a homogeneous mixture of chitosan in an aqueous medium. A dispersion is typically stable for a substantial amount of time, i.e. meaning that the dispersed particles are not essentially readily settled in the aqueous medium. Typically, a dispersion is stable for at least 30 minutes, more preferably at least 1 hour, even more preferably at least 2 hours, at least 4 hours, at least 6 hours, at least 12 hours, at least 24 hours, at least 36 hours, at least 48 hours, at least 60 hours, such as at least 72 hours.

Stability of a dispersion may be determined by eye, e.g. the observation of settling of particles in a lower part of the dispersion typically indicates that chitosan particles are no longer dispersed in an aqueous medium.

Typically, a suspension is understood as a form of a fluid mixture of solid particles in a liquid medium that usually phase-separate over time. Usually, a suspension is less stable than a dispersion.

Said fluid mixture may be prepared using a method known per se, e.g., by mixing an aqueous medium with chitosan.

Said aqueous medium may be water, a salt solution, an acidic solution or a buffer solution.

Said aqueous medium should be food-grade, i.e., suitable for human consumption. Examples of suitable aqueous media include an acetate solution, a citrate solution, lactate solution and a phosphate solution. Preferably, said suitable aqueous media comprises a (sodium) acetate solution.

Preferably, said aqueous medium, is an aqueous medium obtained from a natural source, such as fruit juice, in particular juice of a citrus fruit, e.g., lemon juice or lime juice or natural vinegar. Such aqueous media are advantageously suitable for preparing a clean-label bakery product.

Said fruit juice may be pressed from the corresponding fruit and used directly to prepare an aqueous solution comprising chitosan, or may first be processed, e.g., to remove one or more components from the fruit juice. Typically, the fruit juice is at least subjected to a step of filtration to remove solids. Optionally, said fruit juice is subjected to one or more substantial purification, e.g., to separate acidic components from other components present in the juice. For example, lemon juice may be purified to obtain an aqueous solution of citric acid, malic acid, or a combination thereof.

Preferably, said fluid mixture (comprising chitosan) has a pH of at least 4, more preferably at least 4.5, in particular at least 5. Preferably, the solution has a pH of at most 7, more preferably at most 6.5, even more preferably at most 6, in particular at most 5.5.

Said fluid mixture comprising chitosan preferably has a pH in the range of between about 4 and about 7, more preferably a pH in the range of between about 4.5 and about 6.5, in particular between about 5 and about 6.

Preferably, the pH of the dough is at least 4, more preferably at least 4.5, in particular at least 5. Preferably, the solution has a pH of at most 7, more preferably at most 6.5, even more preferably at most 6, in particular at most 5.5. More preferably, the dough has a pH in the range of between about 4 and about 7, more preferably a pH in the range of between about 4.5 and about 6.5, in particular between about 5 and about 6.

The pH of said fluid mixture can be determined using a calibrated pH meter, such as a pH meter from Mettler Toledo. The pH of the dough may be determined by suspending a fixed amount of said dough in water and measuring the pH of the suspension using a calibrated pH meter, for example as described in Example 1.

Said liquid fraction may be removed using any suitable method known in the art. Preferably, said liquid fraction is removed by means of freeze-drying.

Said further dough ingredients, said mixing to obtain a dough and said baking step are as defined herein below in sections "further dough ingredients" and "method steps".

The invention further relates to a method for preparing a dough, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough.

### Coating

The inventors further realized that the antimicrobial activity of chitosan may be significantly enhanced when the chitosan that is administered into the dough is at least partly coated with a coating material (see e.g., Example 3 and Figure 6). Without wishing to be bound by any theory, it is believed that when chitosan is at least partly coated, it is less likely to interact with the dough matrix, which interactions may result in shielding of the positively charged parts of chitosan.

Accordingly, the invention further relates to a method for preserving a bakery product, comprising providing a dough comprising chitosan, and baking the shaped dough to obtain a bakery product, wherein said chitosan is at least partly coated with a coating material, wherein said coating material is at least substantially solid at the dough temperature and wherein said coating material is meltable during baking temperature.

Said coating material may in principle be any suitable coating material that is capable of at least partly coating chitosan. Preferably, said chitosan is coated for at least 25% of the surface of chitosan with a suitable coating material, more preferably at least 50%, at least 60%, at least 70%, at least 80%, at least 90% of the total surface of the chitosan. Most preferably, said chitosan is at least substantially encapsulated in a coating material.

Preferably, said at least partly coated chitosan is an at least partly coated chitosan particle. Preferably, said coating comprises at least 10 wt.% of the total at least partly coated chitosan (particle), based on the total weight of the at least partly coated chitosan (particle), more preferably at least 20 wt.%, at least 30 wt.%, at least 40 wt.%, at least 50 wt.%, at least 60 wt.%, most preferably at least 70 wt.% of the total weight of the at least partly coated chitosan (particle).

Preferably, said coating comprises at most 99 wt.% of the total at least partly coated chitosan (particle), based on the total weight of the at least partly coated chitosan (particle), more preferably at most 98 wt.%, at most 97 wt.%, at most 96 wt.%, at most 95 wt.%, at most 90 wt.%, at most 80 wt.%, most preferably at most 75 wt.% of the total weight of the at least partly coated chitosan (particle).

Preferably, said coating comprises between about 10 wt.% and about 99 wt.% of the total at least partly coated chitosan particle, more preferably between about 15 wt.% and about 80 wt.%, between about 20 wt.% and about 50 wt.%, in particular between about 25 wt.% and about 40 wt.% of the total weight of the at least partly coated chitosan (particle).

Said coating is substantially solid during preparation of the dough, e.g. at typical dough temperature and meltable at baking temperature, meaning that during preparation of the dough, said coating material at least substantially holds its shape or form.

Preferred coating materials comprise a fatty substance, such as a monoglyceride, diglyceride, triglyceride, shortening or a wax. Preferably said coating material comprises a triglyceride or a monoglyceride, most preferably a triglyceride.

Preferably said coating material comprises a vegetable oil, more preferably rapeseed oil, palm oil or a fraction thereof, preferably a high-melting fraction thereof. A high-melting fraction may be obtained by fractionating said rapeseed oil into a low-melting (olein) and high-melting (stearin) fraction. Alternatively or additionally, a high-melting fraction may be obtained by hardening the vegetable oil, e.g. by hydrogenolysis.

Preferably said triglyceride is selected from rapeseed oil and palm oil, more preferably from hydrogenated rapeseed oil, hydrogenated palm oil, the high-melting fraction of rapeseed oil and the high-melting fraction of palm oil.

Alternatively or additionally, said fatty substance is a monoglyceride, preferably glycerol monostearate.

Said coating material, preferably said fatty substance, preferably has a melting point of at least 25 °C, more preferably at least 30 °C, at least 35 °C, at least 40 °C, more preferably at least 45 °C, at least 50 °C, at least 55 °C, at least 60 °C, in particular at least 65 °C.

The coating material usually has a melting point of less than 200 °C, more preferably less than 180 °C, less than 150 °C, less than 120 °C, in particular less than 100 °C, such as less than 80 °C. Typical ranges are between about 25 °C and about 200 °C, between about 30 °C and about 150 °C, between about 35 °C and about 100 °C, in particular between about 40 °C and about 80 °C.

Said melting point may be determined using any suitable method known in the art, such as differential scanning calorimetry (DSC) or a capillary method. As the skilled person will appreciate, if the coating material has a melting range, typically the coating material starts melting at a first temperature and is completely molten at a second temperature (higher than the first temperature). The melting then point refers to the peak temperature as determinable with DSC Or the mean of the melting range as determinable with capillary method.

Said at least partly coated chitosan preferably comprises chitosan in predispersed, pre-dissolved or pre-suspended form. Accordingly, said chitosan has been obtained by preparing a fluid mixture comprising chitosan and an aqueous medium and removing a liquid fraction of said aqueous medium to obtain a solid fraction comprising chitosan, as defined herein above.

The inventors further realized that the effect of said coating material could be enhanced when the pH of the dough was below 7, more preferably below 6.5, even more preferably below 6. Typically, the pH of the dough is between about 4 and about 7, more preferably between about 4.5 and about 6.5, in particular between about 5 and about 6.3.

This may be achieved by inclusion of an acidulant in the pre-mix or dough according to the invention. Preferably, said acidulant has a pKa of below 4, such as citric acid.

Said acidulant is preferably present in an amount of at least 0.1 wt.%, more preferably at least 0.15 wt.%, at least 0.2 wt.% at least 0.25 wt.%, based on the total dry weight. Preferably, said acidulant is present in an amount of at most 1 wt.%, at most 0.8 wt.%, at most 0.6 wt.%, at most 0.5 wt.%, at most 0.4 wt.% based on the total dry weight. Typically, said acidulant is present in an amount of between about 0.1 wt.% and about 1 wt.%, between about 0.15 wt.% and about 0.8 wt.%, between about 0.2 wt.% and about 0.6 wt.%, between about 0.25 wt.% and about 0.4 wt.%, based on the total dry weight.

The invention further preferably relates to a method for preparing a dough or pre-mix for preparing a bakery product, comprising mixing chitosan with one or more dough ingredients to obtain a dough, wherein said chitosan is at least partly coated with a suitable coating material, wherein said coating material is at least substantially solid at the dough temperature and wherein said coating material is meltable during baking temperature.

Preferably herein, the pH of said dough or pre-mix is below 7, in particular between about 4 and about 6.5.

### Further dough ingredients

Typical dough ingredients include starch (preferably provided by flour), water, fat and salt.

Preferably said dough comprises starch, preferably a cereal starch. Preferably said cereal starch is selected from wheat starch, corn starch and rice starch.

Alternatively or additionally, said dough or bakery product comprises flour, preferably selected from wheat flour, spelt flour, corn flour, oat flour, barley flour, rye flour, sorghum flour, buckwheat flour, millet flour, triticale flour, amaranth flour, teff flour, rice flour, quinoa flour, tapioca flour, potato flour, chickpea flour, coconut flour, almond flour, cassava flour, arrowroot flour, pea flour and combinations thereof.

Most preferably, said dough comprises wheat flour, spelt flour, rye flour, corn flour, rice flour or a combination thereof, even more preferable said bakery product comprises wheat flour. Wheat flour typically comprises, based on the total weight of the wheat flour, about 70-75 wt.% of starch, about 14 wt.% of water and about 8-11 wt.% of protein.

Said dough further preferably comprises a fat. Said fat may be a solid fat such as shortening, butter or margarine, or may be a liquid fat (vegetable oil) which is typically liquid at a temperature of about 25 °C and atmospheric pressure. Vegetable oils typically comprise a lower content of saturated fatty acids, which is considered advantageous from a health perspective.

Preferably, said dough comprises a vegetable oil, preferably selected from sunflower oil, olive oil, walnut oil, canola oil, rapeseed oil, peanut oil, coconut oil, sesame oil, grapeseed oil and avocado oil.

The dough may further comprise one or more leavening agent(s), to provide leavening of the bakery product, giving a more voluminous product. Preferably, the leavening agent is a yeast, more preferably baker's yeast.

Baking powder and leavening acids such as monocalcium phosphate (MCP), sodium aluminium phosphate (SALP) and sodium aluminium sulphate (SAS), sodium acid pyrophosphate (SAPP) may also be used.

The dough may further comprise a sweetener such as sugar, aspartame, stevia or honey. A sweetener is typically used to prepare a sweet bakery product such as a dessert cake, pastry, pie or cookies.

The dough may further comprise water. Said water may be provided as such, e.g., using tap water or mineral water, or may be provided in another source, e.g. in the form of (plant-based) milk or the like.

The dough may optionally comprise one or more other typical dough ingredients, e.g., emulsifiers, such as lecithin; thickening agents, e.g., gums; salt; ascorbic acid, ammonium sulphate, flavouring agents and the like. If the dough, pre-mix or bakery comprises one or more of these optional ingredients, they are preferably natural ingredients, such as e.g., sunflower or soybean lecithin or natural flavouring agents.

The amount of dough ingredients present in the dough depends on the type of bakery product to be prepared. The skilled person is able to select the amount of dough ingredients depending on common general knowledge in baking and the information provided herein.

### Other preservatives

Said dough may further comprise one or more preservatives other than chitosan, to further enhance shelf-life of the bakery product.

Said preservative may be a chemical preservative or a natural preservative.

Preferably, the dough further comprises one or more organic acids having a pKa of 4 or more, or a salt thereof. Such organic acids typically exert an anti-microbial effect in bakery products and are thus suitable to prolong shelf-life of bakery products.

Said organic acid having a pKa of 4 or more, or a salt thereof, may in principle be any organic acid having a pKa of 4 or more, or a salt thereof that exhibits antimicrobial activity against *A. niger* and/or *P. paneum* in bakery products.

Preferably, said organic acid has a pKa of 4 or more, more preferably 4.2 or more, even more preferably 4.5 or more, in particular 4.7 or more. Preferably said pKa is at most 10, more preferably at most 9, at most 8, at most 7, in particular at most 6.5.

Preferably, said organic acid has a pKa in the range of about 4 to about 10, more preferably in the range of between about 4.2 and about 9, between about 4.5 and about 8, between about 4.7 and about 6.5.

The pKa preferably relates to the pKa of the carboxylic acid group of said organic acid in an aqueous medium, in particular water.

The pKa of common organic acids have typically been described (see e.g., Perrin, D. D., Dempsey, B., and Serjeant, E. P., pKa Prediction for Organic Acids and Bases, Chapman and Hall, London, 1981). For example, the pKa of acetic acid is about 4.74, the pKa of propionic acid is about 4.87, the pKa of sorbic acid is about 4.76, the pKa of benzoic acid is about 4.19, the pKa of citric acid is about 3.13 and the pKa of lactic acid is about 3.85.

Said pKa may also experimentally determined using methods known in the art, for example by preparing a titration curve using a strong base and a (color) indicator.

Such organic acids have been found to be particularly suitable as preservatives for bakery products.

An organic acid as used herein refers to a small organic molecule comprising a carboxylic acid group. Said organic acid may be typically described with general molecular formula CₓH_{y}O₂H. Herein, x may be any integer number ranging from 2 to 8, in particular ranging from 2 to 6. Preferably x is selected from 2, 3, 4, 5 or 6. Herein, y may be any integer number ranging from 3 to 15, preferably ranging from 3 to 11, provided the organic acid is a chemically stable molecule.

Preferably, said organic acid is a saturated organic acid molecule. Saturated organic acid molecules are typically represented by molecular formula CₓH₂ₓ₋₁O₂H, wherein x ranges from 2 to 8, preferably from 2 to 6, in particular wherein x is 2 or 3.

In a particularly preferred embodiment, said organic acid is selected from acetic acid, propionic acid, sorbic acid and benzoic acid.

Said organic acid may be provided in the dough in protonated form, or as a suitable salt thereof. With the term suitable salt is meant a salt that is suitable for incorporation in food products, i.e., it should be edible and not substantially toxic to humans at the applied amounts.

As the skilled person will appreciate, the organic acids having a pKa of 4 or more and their salts are present in a chemical equilibrium in the dough and bakery product. Accordingly, if a salt of an organic acid is provided into the dough typically the protonated organic acid is formed *in situ* in the dough, at common dough pH (typically between about 5.5 and about 6.5). Accordingly, typically a mixture of said organic acid and its salt is present in the dough, pre-mix and bakery product according to the invention.

Preferably, a salt of said organic acid is provided in the dough. This is advantageous, because the salts of said organic acids are typically solid at room temperature, which facilitates application and handling thereof.

Preferably, said salt is a sodium salt, a potassium salt, an ammonium salt or a calcium salt of said organic acid, more preferably a sodium salt or a calcium salt. In particular, a salt of an organic acid selected from calcium propionate, sodium propionate, sodium acetate or calcium acetate is provided in the dough.

Salts of organic acids are commercially available as food preservative. For example calcium propionate (E282), calcium acetate (E263), potassium sorbate (E202) and sodium benzoate (E211) are all commercially available food preservatives.

Preferably said organic acid having a pKa of 4 or more, or a salt thereof, is present in an amount in said dough, based on the total dry weight, of at least 0.01 wt.%, more preferably at least 0.05 wt.%, even more preferably at least 0.1 wt.%, at least 0.15 wt.%, at least 0.2 wt.%, at least 0.25 wt.% in particular at least 0.3 wt.%. Typically, said organic acid is present in an amount, based on the total dry weight, of at most 1 wt.%, preferably at most 0.9 wt.%, more preferably at most 0.8 wt.%, at most 0.7 wt.%, at most 0.6 wt.%, at most 0.5 wt.%, in particular at most 0.4 wt.%.

Preferably, said organic acid is present in an amount of between about 0.01 wt.% and about 1 wt.%, more preferably between about 0.05 wt.% and about 0.8 wt.%, in particular between about 0.1 and about 0.5 wt.%, in particular about 0.3 wt.%, based on the total dry weight of the dough.

Said organic acid having a pKa of 4 or more, or salt thereof, is preferably present in the dough, pre-mix or bakery product according to the invention in the form of a natural preservative, such as a fermented carbohydrate.

Said carbohydrate may in principle be any carbohydrate that is fermentable to produce organic acids, preferably which is fermentable by a bacterium from the genus Propionibacterium. Examples include starch, dextrose, glucose, sucrose and glycerol. Accordingly, said dough, pre-mix or bakery product according to the invention preferably comprises a fermented starch, fermented dextrose, fermented glucose, fermented sucrose and/or fermented glycerol. Such bakery products are advantageously suitable as clean-label product.

Accordingly, the invention preferably relates to a pre-mix, dough, bakery product comprising a fermented carbohydrate, preferably fermented starch, more preferably fermented wheat flour, and chitosan.

Said fermented carbohydrate, preferably fermented starch is preferably a fermented starch that has been fermented with a bacterium from the genus *Propionibacterium,* more preferably *P. freudenreichii* and/or *P. acidipropionici.*

As the skilled person will appreciate, said fermented starch, preferably said fermented wheat flour as defined herein is distinct from said starch and/or said flour. Thus, said flour and/or said starch typically serves to provide structure to said bakery product. In principle, said flour and/or said starch does not have substantial antimicrobial activity.

Accordingly, said flour has preferably not been fermented, more preferably has not been fermented by Propionibacterium, in particular has not been fermented by *P. freudenreichii.*

Said starch may be any type of starch suitable for application in bakery products, preferably said starch comprises wheat starch, corn starch, cassava starch, pea starch or rice starch, more preferably native wheat starch, native corn starch, native cassava starch, native pea starch, native rice starch or a combination thereof.

Preferably, said starch is provided by flour, more preferably wheat flour.

Without wishing to be bound by any theory, it is believed that when a carbohydrate such as starch is subjected to fermentation with a bacterium from the genus *Propionibacterium,* in particular *P. freudenreichii,* short chain organic acids, such as propionic acid, are formed which exert an anti-microbial activity as substantiated herein above.

Fermented wheat flours are commercially available, such as Upgrade WS from Kerry, or can be prepared using a method known per se, e.g., by subjecting wheat flour to fermentation with a *Propionibacterium,* in particular *P*. *freudenreichii,* for example as described by Ranaei et al. 2020 Food Technol Biotechol. 58(2):115-127.

Substrates for preparing fermented wheat flour may be any type of wheat flour including whole wheat flour, all-purpose flour and durum flour.

Preferably said fermented carbohydrate, preferably fermented starch, more preferably FWF is present in an amount, based on the total weight of flour, of at least 0.5 wt.%, more preferably at least 0.6 wt.%, even more preferably at least 0.7 wt.%, in particular at least 0.78 wt.%. Typically, fermented starch, preferably fermented wheat flour is present in an amount, based on the total dry weight, of at most 5 wt.%, preferably at most 4 wt.%, more preferably at most 3 wt.%, in particular at most 2 wt.%.

Preferably, said fermented carbohydrate, more preferably fermented starch, even more preferably fermented wheat flour is present in an amount of between about 0.5 wt.% and about 5 wt.%, more preferably between about 0.6 wt.% and about 3 wt.%, in particular between about 0.7 and about 1 wt.%, based on the total dry weight.

The inventors surprisingly realized that with a combination of an organic acid having a pKa of 4 or more, or a salt thereof and chitosan, the MFSL of a bakery product may be increased by up to 29.9%, compared to control. Unexpectedly, the inventors found that addition of a relatively low amount of chitosan (i.e., <0.5 wt.% FWB) in combination with 0.78 wt.% of FWF had an adverse effect on the TOA of *A. niger* compared to 0.78 wt.% of FWF alone (see Figure 9).

Surprisingly, a combination of CalPro (0.3% FWB) or FWF (0.78% FWB) with >0.5 wt.% of chitosan markedly improved TOA of *A. niger* with more than 102-104% compared to control without preservative and respectively more than 24% and more than 35% compared to FWF (0.78% FWB) or 0.3 wt.% CalPro (0.3% FWB) alone (Figure 2 A-B). This increase in TOA (102-104%) is more than the total of individual effects of FWF (+ approximately 62%) or CalPro (+ approximately 50%) and chitosan (+ approximately 20-24%) compared to control without preservative (Figure 2 A-B). Thus, these results indicate that both CalPro and FWF in combination with chitosan act synergistically together against *A. niger.*

A synergistic effect between an organic acid having a pKa of 4 or more, or a salt thereof, and chitosan is advantageous, because it allows to improve MFSL by increasing TOA of moulds, in particular *A. niger* without needing to use higher amounts of the organic acid having a pKa of 4 or more, or a salt thereof.

### Method steps

In a method according to the invention, the dough may be prepared in a manner known per se, with the proviso that the chitosan is added therein in the specified form. Preferably, said dough is prepared by mixing chitosan with one or more other typical dough ingredients to form a dough having chitosan distributed therein, preferably wherein said chitosan is substantially homogeneously distributed throughout the dough. This means that the concentration of chitosan in two randomly taken samples of the dough or bakery product, e.g. one sample taken from the core of the dough or bakery product, i.e. at least one centimetre away from the surface or rim of the dough or bakery product, and one sample taken from the surface of the dough or bakery product, is essentially the same.

Mixing may be achieved using any suitable method known in the art, e.g., by kneading of the dough using a mechanical mixer or by hand. The dough ingredients may be added in any particular order. For example, all dough ingredients may be added at once, or first a part of the dough ingredients may be mixed followed by adding the rest of the dough ingredients.

Typically the temperature of the dough when performing a method according to the invention is at most 30 °C, preferably at most 25 °C.

Preferably, the dough temperature is between about 5 °C and about 30 °C, more preferably between about 10 °C and about 25 °C, in particular between about 15 °C and about 23 °C.

The dough is subsequently baked to obtain a bakery product. Any suitable method known in the art can be used to bake the bakery product, depending on the type of bakery product and type of dough ingredients used.

Suitable baking conditions may be selected to bake the bakery product according to the invention. The bakery product may be heated by dry heat, e.g., such as in an oven or on a hot plate, by steam, or by hot oil, such as in a pan (pan-fried) or deep fryer. However, the bakery product is preferably heated using dry heat, preferably in an oven.

Typical baking temperatures are at least 100 °C, more preferably at least 120 °C, in particular at least 130 °C. Preferably, said baking conditions are between about 120 °C and about 300 °C, preferably between about 150 °C and about 250 °C, more preferably between about 165 °C and about 200 °C.

The dough is optionally shaped before baking.

Suitable methods for shaping the dough typically depend on the consistency, e.g. the firmness and viscosity of the dough. For a firm dough, typically the dough may be shaped mechanically or manually and can subsequently be baked, without requiring a means to hold its shape. For example, for croissants, pizza's and the like, typically no mould is necessarily required.

More fluid doughs, also referred to sometimes in the art as "batter" typically require a firm means, such as a firm mould to keep the shape. Also, if a specific shape is required, a mould may be required to hold the shape. Some cakes, such as pound cake, and pies may require the use of a means, such as a mould to keep the shape prior to or during baking.

The skilled person is capable of selecting appropriate shaping and baking conditions depending on common general knowledge and the information provided herein.

### Bakery product/dough/pre-mix according to the invention

The invention further relates to a bakery product, pre-mix or dough obtainable by a method according to the invention

In principle, the methods according to the invention are suitable for preparing essentially all types of bakery products. Preferably, the bakery product is selected from from breads, such as loaf breads, bagels, buns, rolls, croissants, baguettes, pretzels, brioches, crumpets and flatbreads; dessert cakes, such as pound cakes, sponge cakes, chiffon cakes, genoise cakes, cake muffins, brownies, cheesecakes, and angel cakes; pastries, pies, cookies, flour tortillas and pizza's, preferably wherein said bakery product is a bread, more preferably a loaf bread.

Key micro-organisms known to be involved in spoiling of bakery products are *A. niger* and *P. paneum.* Most micro-organisms involved in spoiling of bakery products are fungi, but yeasts and bacteria can also be involved, although typically to a lesser extent.

Accordingly, the invention relates to a (method for preserving a) bakery product, which bakery product has a prolonged shelf-life compared to a control bakery product.

Said control bakery product is a bakery product of the same type, e.g., if the MFSL of a loaf bread is determined, then the control bakery product is also a loaf bread.

The control bakery product is prepared from the same dough, with the proviso that chitosan is absent.

A bakery product obtainable by a method according to the invention preferably has a MFSL of at least 50 hours, preferably at least 60 h, more preferably at least 90 h, more preferably at least 100 h as determinable with an accelerated shelf-life test as described in Example 1. Advantageously, ASLT has increased sensitivity, reproducibility, and statistical power. In an ASLT, a test sample of a bakery product to be assessed is inoculated with a pre-defined number of cells/spores of a micro-organism known to be involved in spoilage, typically with spores of *A. niger* and/or spores *of P. paneum.* To improve accuracy, typically freeze-dried spores of one batch of a fungus are used in a test, to make sure that viability and number of spores are constant and the results can be compared.

The MFSL of bakery products is assessed by monitoring appearance of micro-organisms, preferably fungi using photographic imaging and visual inspection of photographs and bakery products. MFSL is determined as time in hours between inoculation of a bakery product with the micro-organism to be assessed, until spoilage of the bakery product becomes visible by eye, e.g., due to forming of colonies of a fungus.

A bakery product obtainable by a method according to the invention typically has a shelf-life of at most 336 h, preferably at most 312 h, more preferably at most 288 h, at most 264 h, at most 240 h, at most 216 h, most preferably at most 192 h, as determinable with an ASLT as described in Example 1. Preferably, the MFSL is between about 50 hours and about 250 h, between about 60 h and about 200 h, between about 90 h and about 150 h, between about 100 h and about 120 h.

The invention further relates to a dough or a pre-mix for preparing a bakery product comprising chitosan, wherein said chitosan is at least partly coated with a coating material, wherein said coating material is at least substantially solid at dough temperature and wherein said coating material is meltable during baking temperature.

The pH of a dough, pre-mix and a bakery product (obtainable by a method) according to the invention depends on the content of chitosan, the manner of addition into the dough and the presence of optional other dough ingredients in the dough. A control bakery product (free of preservatives) typically has a slightly acidic pH, in particular a pH of around 6. As a rule of thumb, the presence of chitosan normally slightly increases the pH of a dough or bakery product compared to control.

The pH of a dough or pre-mix (obtainable by a method) according to the invention is preferably between about 5.5 and about 7, more in particular between about 5.7 and about 6.8, even more in particular between about 6 and about 6.5. Said pH is preferably at most 7, more preferably at most 6.5, at most 6, at most 5.7, in particular at most 5.5.

The pH is determinable by suspending a fixed amount of said dough or bakery product in water and measuring the pH of the suspension using a calibrated pH meter, for example as described in Example 1.

An advantage of using chitosan and FWF to reduce spoilage of a bakery product is that it allows to reduce the content of chemical preservatives in bakery products, preferably eliminates the presence of chemical preservatives. Common chemical preservatives include calcium propionate, sodium propionate, organic propionates, potassium sorbates and sorbic acids.

Accordingly, the invention preferably relates to (a method for preparing) a dough, a pre-mix or a bakery product that comprises at most 0.1 wt.% of a chemical preservative, preferably comprises at most 0.05 wt.% of a chemical preservative, more preferably at most 0.01 wt.% of a chemical preservative, in particular is essentially free of a chemical preservative, based on total dry weight.

A bakery product that is essentially free of a chemical preservative is preferably a clean label bakery product. "Clean label" is a term used in the art to refer to a food product that is essentially free of chemical additives, such as a chemical preservative.

Accordingly, the dough, pre-mix and bakery product (obtainable by a method) according to the invention is preferably essentially free of chemical additives.

For the purpose of clarity and a concise description features are described herein as part of the same or separate embodiments, however, it will be appreciated that the scope of the invention may include embodiments having combinations of all or some of the features described.

The invention is demonstrated by the following examples.

### Examples

### Example 1: Antimicrobial impact of chitosan with different MWand DDA in bread

Breads were made by mixing the dough ingredients from Table 1. The wt.% for several ingredients are given based on flour weight (Flour Weight Based, FWB). For the prepared recipes the difference with total dry weight is insubstantial. The following breads were prepared: a control without any preservatives, a reference containing 0.3% flour weight based (FWB) calcium propionate (CalPro), and a bread containing 1% chitosan (KitoZyme, Belgium) with number average MW of 15 kDa and degree of deacetylation (DDA) of 70%. The chitosan sample was obtained from cell wall of *A. niger* (KitoZyme, Belgium). Ingredients were mixed using a spiral mixer for 10 minutes. Afterwards the dough for each trial was divided into three pieces of 520 g, rounded manually, and placed into bread tins. The dough pieces were placed in a proofing cabinet to rise at 40 °C and 80% relative humidity until they reach similar height (fermentation time between 60-70 min). The breads were baked for 22 minutes in a deck oven at 260 (bottom) and 230 (top) °C.

**[Table 1] Bread recipes**

| Ingredients | % Flour weight based | | |
|---|---|---|---|
| | Control | CalPro | Chitosan |
| Flour | 100 | 100 | 100 |
| Water | 58 | 58 | 58 |
| Block yeast | 3.75 | 3.75 | 3.75 |
| Salt | 1.5 | 1.5 | 1.5 |
| Sugar | 1 | 1 | 1 |
| Gluten | 1 | 1 | 1 |
| Ascorbic acid | 0.005 | 0.005 | 0.005 |
| Fungal amylase | 0.02 | 0.02 | 0.02 |
| Xylanase | 0.002 | 0.002 | 0.002 |
| CalPro | - | 0.3 | - |
| Chitosan (MW 15 kDa, DDA 70%) | - | - | 1 |

Following baking, the breads were cooled in a HEPA-filtered chamber for 90 min. One bread was used for pH measurement and two breads were subjected to ASLT.

To measure the pH of the bread, 10 g bread was placed into 90 ml water (10% w/v) and suspended using a blender. The pH of the resulting bread suspension was measured with a calibrated portable pH meter (Accumet AB150, Fischer Scientific).

To perform ASLT, the remaining two breads were sliced to 13 mm slices. The crumb (inner part of breads) of three random slices from each bread were cut out using a cookie cutter (3.2 cm diameter) and placed in sterile 6-well plates (2x breads × 3 slices). Two 6-well plates were prepared per bread type. Each bread piece in a 6-well plate was inoculated with 3 aliquots of ±500 spores (20 pL) of either *A. niger* or *P. paneum.* Therefore, 18 spots of each mould were inoculated per trial (6 bread piece × 3 aliquots). Freeze-dried spores were used in all experiments. The inoculated breads incubated at room temperature of around 21 °C untill visible mould appearance. The appearance of the moulds was imaged by taking photographs. The images were inspected visually, and the TOA was defined as mould appearance in hours after mould inoculation.

To study microbial activity of chitosan samples with different MW and DDA, three different chitosans obtained from *A. niger* with high MW and different DDA were purchased from ChiBio (China):
1) 281 kDa and 85% DDA
2) 267 kDa and 90% DDA
3) 274 kDa and 95% DDA

Due to limited availability of the high MW chitosan samples, ASLT was performed at small scale in bread rolls. To this end, two different doughs were prepared: without any preservatives and with the high MW chitosan samples dosed at 0.9% (due to limited availability of samples). A bread dough was made by mixing the dough ingredients from Table 1 together for 5 minutes using a DoughLAB mixer (PerkinElmer). The dough was placed in a proofing cabinet at 40 °C with no humidity for 70 min. Dough was divided (8 × 50 g), rounded, placed in aluminum cups (10 cm diameter) and baked at 200 °C for 15 min. Of the obtained breads, six breads were used for preparation of two 6-well plates for the ASLT, and one used for pH measurement. 6-well plates were prepared and ASLT was performed as outlined above. The results are shown in Figure 1.

Inoculation of the control breads without any preservatives with ±500 spores of *A*. *niger* or *P. paneum* led to TOA of 50±1.2 and 70±1.8 hours respectively (Figure 1A). CalPro (0.3% FWB) increased TOA of *A. niger* or *P. paneum* 80% and 17% respectively compared to respective control bread without preservatives (Figure 1A). Addition of chitosan (1% FWB) increased the pH of bread to 6.45 but did not lead to profound increased TOA of *A. niger* compared to control test (13% extra TOA). In contrast, *P. paneum* was more sensitive to chitosan and the TOA was increased 29% compared to the tests (Figure 1B). Interestingly, the high MW chitosan samples (267-281 kDa, 85-95% DDA) showed similar antimicrobial activity against *P. paneum* (18-26%- increased TOA compared to control without preservative) (Figure 1B) but not much against *A. niger* (Figure 1A). The pH of the bread samples with the high MW chitosan samples raised to 6.4 (Figure 1 A-B). These results are in line with the results of the low MW chitosan sample obtained from the other provider (KitoZyme, 70% DDA, MW 15 kDa) that resulted in 29% increased TOA against *P. paneum,* and pH of bread reached to 6.45 (Figure 1) (note that low MW chitosan was dosed at 1% FWB whereas high MW chitosan samples were dosed at 0.9% FWB). Independent of the chitosan source, provider, the applied bread type (tin bread vs bread rolls), it can be derived form Example 1 that TOA *of P. paneum* can be prolonged with chitosan molecules with an MW in the range of 15 kDa to 281 kDa and DDA in the range of 70-95%.

Interestingly, breads containing chitosan (MW 15 kDa, 70% DDA) showed more restricted growth compared to control breads without preservative but also compared to breads with CalPro (0.3% FWB, Figure 1C, image obtained after 7 days of inoculation). Therefore, chitosan added to breads at 1% FWB was more effective in reducing growth of *P. paneum* compared to CalPro added at 0.3% FWB. In contrast, CalPro was more effective against *A. niger.*

### Example 2: Chitosan enzymatic hydrolysis

For enzymatic hydrolysis, the high MW chitosans from Example 1 (281 kDa and 85% DDA, 267 kDa and 90% DDA, 274 kDa and 95% DDA) were used. The chitosan samples were individually dispersed in 50 mM Na-acetate solution with pH 5.5 (to reach final chitosan concentration of 3% w/v) and incubated overnight in an oven at 50°C. The overnight incubation resulted in an increase of the pH to above 8 due to alkaline nature of chitosan samples. To decrease the pH of the dispersion containing chitosan samples to 5.5, acetic acid was gradually added until pH to 5.5 was achieved. This led to final (Na)-acetate concentration of 150 mM in chitosan dispersions. 1.2 L chitosan solutions (3% w/v) were enzymatically hydrolyzed using 0.25% (w/v) Celluclast enzyme (Novozymes). Subsamples were taken after 0.5, 1, 2, and 6 hours and heated to 100 °C to deactivate the enzyme. The number average MW of the chitosan fragments was analysed using Gel Permeation Chromatography (GPC) equipped with a Refractive Index Detection (RID) detector (Shimadzu, Tokyo, Japan). Separation of chitosan fragments was achieved with three (8 mm × 300 mm) PSS Novema Max medium (P/N 212-0002) columns connected in series with a PSS Novema Max guard column (6.0 mm × 400 mm). Samples (100 pL) were eluted isocratically with a solution of 0.1M sodium chloride (NaCl) and 0.1% Trifluoroacetic acid (TFA) as mobile phase at a flow rate of 0.9 mL/min for 60 min at 40°C. The number average MW of the fragments was calculated against a standard series of dextran molecules with known sizes.

Hydrolysis after 0.5, 1, 2, and 6 hours led to production of fragments with MW of *ca.* 44, 32, 22, and 11 kDa, respectively (Table 2). The identical size profiles of the three samples with three different DDA shows that the DDA does not interfere with the enzymatic hydrolysis. The samples were freeze-dried for 48 hours and were used as preservatives in breads. Due to limited availability of the hydrolyzed samples, ASLT was performed at small scale in bread rolls. To this end, four different doughs were prepared without any preservatives, with the original high MW chitosan samples (solids, not in solvent not hydrolyzed) at 0.9% FWB as the reference, with hydrolyzed chitosan samples at 1.17% FWB (0.9% chitosan, 0.28% solvent) (Table 2), and with freeze-dried solvent alone at 0.217% FWB to test the impact of the applied solvent on antimicrobial activity. Bread rolls were prepared as outlined in Example 1. Further, the three original high MW chitosan samples dispersed in solvent but not hydrolyzed were also freeze-dried and tested for antimicrobial impact in ASLT.

**[Table 2] Number average MW of the chitosan fragment after different hydrolysis time.**

| | **Time of hydrolysis** | | | |
|---|---|---|---|---|
| **Chitosan as such** | **0.5 h** | **1 h** | **2 h** | **6 h** |
| 85% DD 281 kDa | 44 kDa | 33 kDa | 22 kDa | 12 kDa |
| 90% DD 267 kDa | 44 kDa | 34 kDa | 22 kDa | 12 kDa |
| 95% DD 274 kDa | 46 kDa | 34 kDa | 22 kDa | 11 kDa |

Antimicrobial activity was also observed with all the hydrolyzed chitosan samples (Figure 2 A-F & E) whereas no substantial antimicrobial activity was noted when freeze-dried solvent was added to the breads (Figure 2 F&H). In line with Example 1, the results showed that TOA of *P. paneum* can be prolonged with chitosan molecules with an MW in the range of 11 kDa to 281 kDa and DDA in the range of 70-95%.

Further, to test a dose-response relationship between the hydrolyzed chitosan samples and TOA, one of the hydrolysed chitosan samples (44 KDa, 90% DDA; dispersed in solvent and hydrolyzed) was applied at 0.5 (0.34% chitosan, 0.16% solvent), 1 (0.69% chitosan, 0.31% solvent), 1.5 (1.03 % chitosan, 0.47% solvent) and 2% (1.38 % chitosan, 0.62% solvent) FWB and ASLT was performed as outlined. This indeed showed that increasing chitosan concentration leads to a gradual increase in TOA of both *A. niger* and *P. paneum* (Figure 3). The pH of bread remained at 5.7 as the starting chitosan samples used all had similar pH of approximately 5.5.

Another notable outcome of these experiments was restriction of *P. paneum* growth on breads containing hydrolyzed chitosan samples compared to bread containing the untreated high MW solid chitosan (Figure 4). Interestingly, when the high MW chitosan samples were dispersed in acetate solvent pH 5.5 (150 mM), not hydrolyzed, and freeze-dried prior to inclusion in the dough, it increased TOA of *P. paneum* (23-32% compared to control without preservative, (Figure 2 C, D & G) and highly restricted growth of *P. paneum* (Figure 4) in line with the hydrolyzed samples (Figure 2, C, D & G).

These results indicate that antimicrobial activity of chitosan may be enhanced when applied in dispersed form. To test if the observed antimicrobial activity in presence of chitosan was due to reduced pH, experiments were performed where two types of acidulants (citric acid and acetic acid) were added with chitosan (15 KDa, 70% DDA from KitoZyme) in the mixing bowl before baking the bread samples and performing ASLT. The results showed that including acidulants together with chitosan indeed reduced bread pH, but this also led to deteriorated antimicrobial activity (Figure 5). These results underpin that rather than a lower pH in bread matrix, dispersing chitosan in a (Na)-acetate solvent before mixing in bowl increases its antimicrobial activity in bread.

### Example 3: Chitosan encapsulation

Breads were prepared using the method according to Example 1, using free low MW chitosan (15 kDa, 70% DDA), or encapsulated form of chitosan (MW 15 kDa, 70% DDA) in different encapsulation matrixes including hydrogenated rapeseed oil, segregated palm, and glycerol monostearate (30 wt.% chitosan and 70 wt.% fat). Using encapsulated chitosan in rapeseed oil, the experiments were repeated in presence of 0.14 and 0.28% FWB citric acid as an acidulant. Encapsulation improved antimicrobial activity in low pH (Figure 6 C & D). This indicates that encapsulating chitosan with a fat having a melting point of more than 40 °C, antimicrobial properties of chitosan in low pH bread could be improved.

### Example 4: Chitosan impact on baker's yeast

One important criterion in selection of a preservative to be added to the mixing bowl before baking bread is the impact on baker's yeast. If the compound has high antimicrobial activity against baker's yeast, a higher amount of yeast needs to be added to compensate for the activity loss which is not economically attractive. Hence, the applied antimicrobial compounds should have minimal impact on baker's yeast. Impact of chitosan on baker's yeast was assessed using an Activigraph MK2 that records volume of gas produced (CO₂ released from yeast fermentation) in a fermenting bread dough system by sensing and interpreting gas pressure. To this end, three different doughs were prepared without any preservatives, with CalPro (0.3% FWB) as the reference and with 0.5, 1, and 2% FWB chitosan (KitoZyme) as outlined above. From each dough, 2 pieces of 100 g dough were placed in a separate Activigraph jar pre-warmed to 30 °C, closed tightly and connected the tubes to the appropriate nozzles. Data was captured as cumulative CO₂ production after 1, 2, and 4 hours per trial. Interestingly, after 1 hour of fermentation, chitosan at 1% FWB showed higher CO₂ production compared to CalPro at 0.3 % FWB (Figure 7). Prolonged incubation led to more negative impact of chitosan, however, yeast fermentation during bread baking usually lasts for 70 minutes. It can be concluded that 1% chitosan does not exhibit pronounced antimicrobial activity against baker's yeast under typical baking conditions.

### Example 5: Chitosan in combination with CalPro or fermented wheat flour

As can be derived from Example 1, chitosan is more effective in reducing growth of *P. paneum* but less effective against *A. niger.* In contrast, CalPro is more effective against *A. niger* but not against *P. paneum.* Therefore, combination of chitosan with CalPro may offer an effective control method against both *A. niger* and *P. paneum* that are the most common and problematic spoilage microorganisms in bakery products. Alternatively, cultured flour known as fermented wheat flour (FWF) can also be used instead of CalPro for clean label purposes. FWF is wheat flour fermented with microbes of the genera *Propionibacteria* (e.g., *Propionibacterium freudenreichii* and *P. acidipropionici*)*.* This fermentation produces natural organic acids mainly consisting of propionic acid neutralized with calcium hydroxide to form natural calcium salts of the organic acids including CalPro.

Surprisingly, addition of combination of CalPro (0.3% FWB) and chitosan (1% FWB) led to 29% extra TOA compared to additive impact of CalPro (0.3% FWB) and chitosan (1% FWB) as compared to control breads without preservative (Figure 8 A & D). This increase in TOA was achieved despite an increase in bread pH to 6.15. At higher pH, the fraction of undissociated acids of weak organic acids (typically having a pKa value in the range of about 3 to 5) which are associated with an antimicrobial effect is relatively low. The increase in TOA of *A*. *niger* is more than individual effects of CalPro and chitosan, indicating a synergistic effect between CalPro and chitosan. In contrast, the combination of CalPro (0.3% FWB) and chitosan (1% FWB) was not better than chitosan (1% FWB) alone in suppressing growth of *P. paneum.* Interestingly, when CalPro was replaced by FWF (Upgrade WS from Kerry) at equal propionate level (CalPro 0.3% = FWF 0.78%, note that this ratio can be changed according to propionic acid content of a given FWF), it similarly showed synergistic interactions against *A. niger* (Figure 8 B). Surprisingly, addition of 0.25% or 0.5% chitosan to 0.78% FWF (equal to 0.3% CalPro) in mixing bowl before baking not only did not improve its activity against *A. niger* beyond FWF alone but also it had an adverse effect on the antimicrobial effect of FWF (Figure 9). This cannot be due to pH increase in presence of as chitosan as the highest pH among FWF and chitosan combination (6.5) was noted when 1% chitosan was added to FWF (Figure 9).

### Example 6: Chitosan in combination with buffered vinegar

To test if chitosan shows synergy with salts of other weak organic acid, combination of chitosan with an acetic acid-based preservative, calcium acetate known as buffered vinegar, was tested. In line with the experiments with FWF (Figure 10), addition of 0.5% FWB chitosan did not lead to synergy against *A. niger* independent of the concentration of buffered vinegar (1 or 2% FWB) (Figure 10A). However, when the concentration of chitosan was increased to 1% FWB, the combination of chitosan with buffered vinegar indeed showed synergy against *A. niger* and increased TOA 3-10% relative to the additive impact of chitosan (1 % FWB) and buffered vinegar (1-2% FWB) as compared to control breads without preservative (Figure 10A). This indicates concentration-dependent synergistic interaction of chitosan with salts of different weak organic acid in controlling growth of *A. niger.* In line with the experiments with CalPro and FWF (Figure 8), no synergy noted against *P. paneum* (Figure 10).

## Claims

1. A method for preserving a bakery product, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough; and
(iv) baking the dough to obtain the bakery product.

2. A method for preserving a bakery product, comprising providing a dough comprising chitosan and baking the dough to obtain a bakery product, wherein said chitosan is at least partly coated with a coating material, wherein said coating material is at least substantially solid at the dough temperature and wherein said coating material is meltable during baking temperature.

3. The method according to claim 2, wherein said coating material is a fatty substance, preferably a fatty substance having a melting point of at least 40 °C.

4. The method according to claim 3, wherein said fatty substance is selected from (a high-melting fraction of) rapeseed oil, palm oil and glycerol monostearate.

5. The method according to any one of the preceding claims, wherein said dough has a pH of at most 7, preferably at most 6, preferably at most 5.7, most preferably at most 5.5, as determinable by the method described in Example 1.

6. The method according to any one of the preceding claims, wherein said chitosan is present in the dough in an amount of at least 0.5 wt.%, based on total dry weight of the dough.

7. The method according to any one of the preceding claims, wherein said chitosan has one or more of the following properties:
a) a molecular weight (MW) of at least 10 kDa, preferably at least 15 kDa;
b) an MW of at most 285 kDa, preferably at most 270 kDa, more preferably at most 200 kDa, at most 150 kDa, in particular at most 100 kDa;
c) a degree of deacetylation (DDA) of at least 70%.

8. The method according to any one of the preceding claims, wherein said dough further comprises an organic acid having a pKa of at most 4, or a salt thereof.

9. The method according to any one of the preceding claims, wherein said dough comprises a fermented carbohydrate, preferably fermented starch, more preferably fermented wheat flour.

10. A bakery product obtainable by a method according to any one of the preceding claims.

11. The bakery product according to claim 10, wherein said bakery product is selected from breads, such as loaf breads, bagels, buns, rolls, croissants, baguettes, pretzels, brioches, crumpets and flatbreads; dessert cakes, such as pound cakes, sponge cakes, chiffon cakes, genoise cakes, cake muffins, brownies, cheesecakes, and angel cakes; pastries, pies, cookies flour tortillas and pizza's, preferably wherein said bakery product is a bread, more preferably a loaf bread.

12. The bakery product according to claim 10 or 11, wherein the bakery product is essentially free of chemical preservatives, preferably wherein said bakery product is clean label.

13. The bakery product according to any one of claims 10 to 12, wherein the bakery product has a shelf-life of at least 55 h, preferably at least 60 h, more preferably at least 80 h, in particular at least 85 h as determinable with an accelerated shelf-life testing as described in Example 1.

14. A method for preparing a dough, comprising
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough.

15. A method for preparing a dough, comprising mixing chitosan with one or more dough ingredients to obtain a dough, wherein said chitosan is at least partly coated with a suitable coating material, wherein said coating material is at least substantially solid at the dough temperature and wherein said coating material is meltable during baking temperature.

16. A dough obtainable by the method according to claim 14 or 15.

17. A dough or a pre-mix for preparing a bakery product comprising chitosan, wherein said chitosan is at least partly coated with a coating material, wherein said coating material is at least substantially solid at dough temperature and wherein said coating material is meltable during baking temperature.
